# FASCICULE DE BREVET EUROPEEN

(11) **EP 0 924 893 B1**
(45) Date de publication et mention de la délivrance du brevet: **20.07.2005**
(21) Numéro de dépôt: 98403185.6
(22) Date de dépôt: 16.12.1998
(51) Int. Cl.: H04L 9/00, H04L 29/06

(54) **Procédé de communication sécurisée**
Verfahren zur gesicherten Kommunikation
Secure communication procedure

(30) Priorité: 19.12.1997 FR 9716194
(43) Date de publication de la demande: 23.06.1999
(73) Titulaire: STMicroelectronics S.A., 92120 Montrouge (FR)
(72) Inventeur: Gaultier, Jean-Marie, Cabinet Ballot-Schmit, 75116 Paris (FR)
(74) Mandataire: Ballot, Paul

(56) Documents cités:
- EP-A- 0 543 644
- US-A- 5 420 925
- PATENT ABSTRACTS OF JAPAN vol. 098, no. 006, 30 avril 1998 & JP 10 049048 A (MATSUSHITA ELECTRIC WORKS LTD), 20 février 1998
- PATENT ABSTRACTS OF JAPAN vol. 098, no. 005, 30 avril 1998 & JP 10 013404 A (YAZAKI CORP), 16 janvier 1998

## Description

La présente invention se rapporte à un procédé de communication sécurisé entre une unité maîtresse et une unité esclave. Elle s'applique dans le domaine des transmissions numériques.

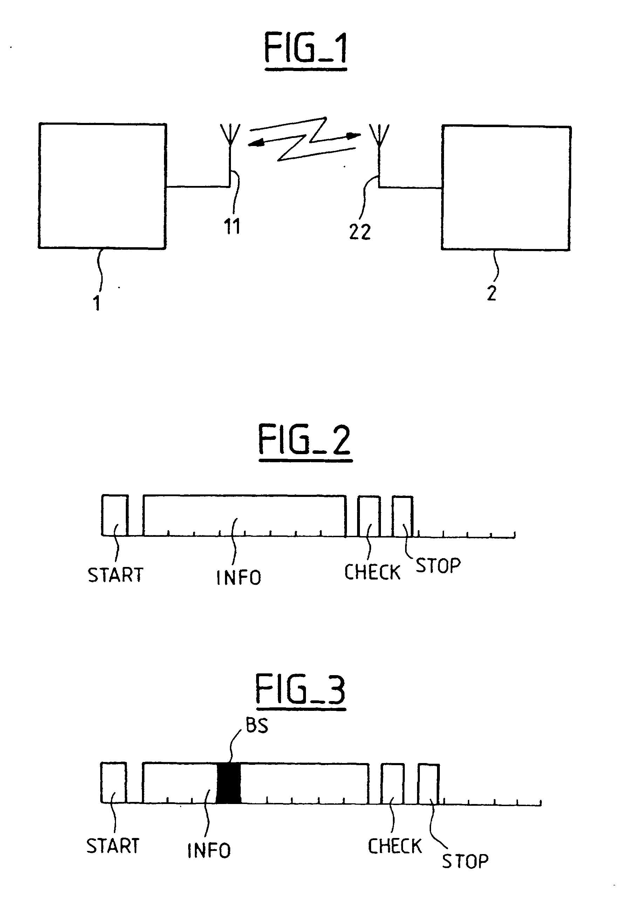

Il peut s'agir par exemple, d'une communication par liaison radiofréquence telle que représentée à la figure 1, sur laquelle une unité maîtresse 1 échange des messages via une antenne émettrice/réceptrice 11 avec une unité esclave 2 également équipée d'une antenne émettrice/réceptrice 22. Le canal de transmission est alors constitué par le volume d'air compris entre les deux antennes 11 et 22. Mais il peut aussi s'agir d'une communication se faisant par l'intermédiaire d'un autre type de canal telle qu'une liaison filaire ou une fibre optique.

L'unité maîtresse et l'unité esclave peuvent alternativement émettre ou recevoir des messages à destination, respectivement en provenance, de l'autre unité. Dans la suite, on distingue une unité maîtresse d'une unité esclave en ce que l'unité maîtresse est celle qui prend l'initiative de la communication. L'unité maîtresse peut ainsi être l'unité centrale d'un ordinateur, et l'unité esclave être l'un de ses périphériques comme par exemple une imprimante commandée à distance par l'intermédiaire d'un canal de transmission.

Le document EP-A-0 773 653 décrit un procédé de décodage d'un flux de données utilisant le codage de Manchester. Ce document porte sur la détection de transitions d'un signal codé (MDAT) et l'échantillonnage de ce signal codé pour déterminer l'état d'un bit du signal d'origine (DOUT). Des commandes particulières dans le signal codé permettent de basculer d'un mode de veille à un mode actif du décodeur.

Le document EP-A-0 707 391 décrit un modulateur/démodulateur infrarouge. Le modulateur/démodulateur utilise une méthode de modulation Flash. Ce document vise à réduire la dissipation de puissance lors de la transmission en utilisant un cordage FM pour la communication infrarouge. Ce document traite également du filtrage du bruit en réception.

Dans l'état de la technique, on connaît des procédés de communication consistant à émettre des messages comportant un mot d'information utile et un ou plusieurs bits de service. La transmission est réalisée en série selon un protocole de communication déterminé. Un tel protocole spécifie le format et la syntaxe des messages qui sont transmis par l'unité maîtresse vers l'unité esclave, ou réciproquement. La transmission s'effectue de maniére synchrone. Elle est séquencée à un rythme déterminé, les unités comportant des moyens connus pour se caler sur le rythme d'une même horloge ou de deux horloges synchrones ou dia-synchrones.

A la figure 2, on a représenté un exemple assez simple d'un format de message connu. Le message comporte tout d'abord un bit de démarrage START qui a pour fonction de synchroniser l'horloge de l'unité destinatrice avec le message reçu.
Un tel protocole spécifie le format et la syntaxe des messages qui sont transmis par l'unité maîtresse vers l'unité esclave, ou réciproquement. La transmission s'effectue de manière synchrone. Elle est séquencée à un rythme déterminé, les unités comportant des moyens connus pour se caler sur le rythme d'une même horloge ou de deux horloges synchrones ou dia-synchrones.

Le message comporte ensuite un mot d'information utile INFO, par exemple codé sur huit bits (un octet). Ce mot peut être un mot d'instruction, dont la valeur indique la nature d'une commande à réaliser par l'unité destinatrice. Il peut aussi s'agir d'un mot d'adresse, dont la valeur indique l'adresse ou une partie de l'adresse d'un emplacement mémoire de l'unité destinatrice à laquelle, par exemple, une donnée doit être lue ou écrite. Enfin, il peut aussi s'agir d'un mot de donnée, dont la valeur indique la valeur d'une donnée à traiter par l'unité destinatrice.

Le message comporte encore un bit de contrôle CHECK qui peut notamment être un bit de contrôle de parité. La valeur du bit CHECK est fixée à la valeur logique 1 ou 0, afin de compléter la somme des valeurs des bits du mot d'information utile INFO à une valeur paire ou impaire selon le type de parité adopté. Le rôle du bit de contrôle CHECK est de permettre à l'unité destinatrice de détecter d'éventuelles erreurs de transmission, afin, le cas échéant, de solliciter une ré-émission du message. Des erreurs de transmission peuvent être provoquées par des perturbations sur le canal.

Le message comporte enfin un bit STOP de fin de transmission, qui indique la fin du message.

En outre, le protocole prévoit en général un nombre d'unités temporelles élémentaires faisant suite au bit STOP, pendant lesquelles l'unité émettrice n'émet plus aucun bit sur le canal, afin de le laisser libre pour que l'unité destinatrice émette un bit d'acquittement de la communication de valeur logique déterminée. La valeur de ce bit d'acquittement, indique si le message a été correctement reçu, notamment en fonction du contrôle effectué à l'aide du bit de contrôle CHECK, et, la cas échéant, si une ré-émission du message est requise. A la figure 1, on a représenté quatre telles unités temporelles élémentaires faisant suite au bit STOP précité.

On connaît actuellement dans les systèmes électroniques une quantité importante de protocoles de communications différents. Chaque protocole est adapté aux contraintes particulières de telle ou telle application (taille des mots à transmettre, mode de contrôle de la qualité de la transmission, mode d'acquittement, durée maximum d'une émission compte tenu du débit numérique, etc...). Bien entendu, au sein d'un même système, l'unité maîtresse et l'unité esclave se conforment à un même protocole pour pouvoir valablement communiquer, de la même manière que deux individus doivent, pour se comprendre, utiliser un langage constitué de mots arrangés suivant les mêmes règles grammaticales.

Les informations relatives au protocole de communication développés par les fabricants de systèmes électroniques font en général l'objet d'une large diffusion, afin de permettre à d'autres fabricants d'incorporer ces systèmes dans des ensembles plus complexes, ou d'en développer de nouvelles applications industrielles et/ou commerciales.

Il résulte qu'aucune notion de sécurité des transmissions contre les interventions passives ou actives de tiers mal intentionnés n'est associée à la définition d'un protocole. Une intervention passive est une activité d'un tiers destinée à prendre connaissance des informations échangées entre deux unités, sans pour cela intervenir dans la communication. Une intervention active, au contraire, désigne une tentative d'intervention frauduleuse dans le fonctionnement du système destinée à prendre le contrôle d'une unité.

Il existe cependant des applications où la sécurité des communications contre ce type d'intervention est une contrainte importante du cahier des charges.

Dans l'état de la technique, une certaine dose de sécurité est introduite par le fait qu'un code d'identification connu des deux unités seulement est émis soit par l'unité maîtresse ou par l'unité esclave, soit par l'une et l'autre de ces unités. La transmission des informations utiles n'est alors effectuée que si les deux unités se sont préalablement échangées un code d'identification valide.

Ce code d'identification peut également être évolutif, c'est-à-dire que sa valeur peut être fonction du nombre de transmissions antérieurement réalisées entre les deux unités.

Toutefois, cette technique nécessite une phase de reconnaissance préalable à la phase de transmission des informations proprement dites, ce qui allonge la durée de la communication.

De plus, l'émission des bits du code d'identification, qui s'apparentent aux bits de service présentés ci-dessus en référence à la figure 2 dans la mesure où ils ne représentent aucune information utile, pénalise le rendement de la communication. On rappelle que le rendement de la communication peut s'exprimer comme le rapport du nombre de bits émis qui codent une information utile au nombre total de bits émis.

Ce problème de rendement est d'autant plus réel que pour être véritablement efficace, un code d'identification doit présenter un grand nombre de valeurs différentes possibles, et doit donc être codé sur un grand nombre de bits. Les unités du système doivent de ce fait disposer d'une importante mémoire non volatile, éventuellement ré-inscriptible si le code d'identification est évolutif. Ceci augmente le coût de fabrication, souvent de manière prohibitive lorsqu'il s'agit d'unités portables de petites tailles destinées à être produites en très grande série.

L'objet de la présente invention est de pallier ces inconvénients de l'état antérieur de la technique.

En effet, l'invention propose un procédé de communication entre une unité maîtresse et une unité esclave, du type précité, dans lequel le mot d'information utile comporte n bits pour coder l'information utile, et au moins un bit supplémentaire dont le rang dans le mot et/ou la valeur évoluent selon une loi d'évolution déterminée, connue de l'unité maîtresse et de l'unité esclave.

Ainsi, la communication est rendue plus sûre vis à vis des tentatives d'intervention passive ou active de tiers mal intentionnés, dans la mesure où, pour qu'un message soit correctement interprété, il est nécessaire de connaître le rang et/ou la valeur courante du bit (ou des) bit(s) supplémentaire(s) compris dans le mot d'information utile.

En substance, la sécurité provient du protocole lui-même, et non du fait qu'un code d'identification ajouté au contenu des messages serait émis.

De plus, chaque bit supplémentaire introduit à un rang quelconque dans un mot d'information comprenant initialement n bits engendre n+1 valeurs différentes possibles pour le mot alors qu'il ne code toujours que la même information utile. Celle-ci se trouve donc dissimulée à l'intérieur du mot émis. Si la valeur du bit évolue également, c'est alors deux fois n+1 valeurs différentes du mot qui sont possibles. A l'inverse, chaque bit supplémentaire alloué à un code d'identification selon l'art antérieur ne fait que multiplier par deux le nombre de valeur possibles de ce code. L'invention permet donc un niveau de sécurité relativement élevé avec un nombre de bits supplémentaires relativement faible. De ce fait, le rendement de la communication n'est pas diminué de manière pénalisante.

D'autres caractéristiques et avantages de la présente invention apparaîtront encore à la lecture de la description d'un exemple préféré de réalisation qui va suivre. Celle-ci est purement illustrative, et doit être lue en regard des dessins annexés sur lesquels on a représenté :
- à la figure 1, déjà analysée, une unité maîtresse et une unité esclave aptes à échanger des messages;
- à la figure 2, également déjà analysée, un exemple de format connu d'un message;
- à la figure 3, un exemple d'un format de message se distinguant de celui de la figure 2 par la caractéristique de l'invention;
- aux figures 4a et 4b, des organigrammes de programmes pour la mise en oeuvre du procédé selon l'invention, respectivement à l'émission et à la réception d'un message;
- aux figures 5a et 5b, des schémas permettant de suivre le déroulement des organigrammes des figures 4a et 4b respectivement.

A la figure 3, on a représenté un exemple d'un format de message émis selon le procédé de l'invention par une unité maîtresse à destination d'une unité esclave, ou réciproquement. Les mêmes éléments qu'à la figure 2 portent les mêmes références.

Le format de message selon l'invention représenté à la figure 3 est conforme à celui de l'art antérieur représenté à la figure 2, sauf en ce que le mot d'information utile INFO comprend huit bits pour coder l'information utile et un bit supplémentaire BS dont le rang dans le mot et/ou la valeur évoluent selon une loi d'évolution déterminée, connue de l'unité maîtresse et de l'unité esclave. Bien entendu, dans le cas général, le mot INFO comprend n bits pour coder l'information utile, et peut également comprendre plusieurs bits supplémentaires tels que le bit BS.

Préférentiellement, le rang et/ou la valeur du bit supplémentaire n'évoluent qu'après une transmission de message entre l'unité maîtresse et l'unité esclave qui a été convenablement acquittée, c'est-à-dire pour laquelle l'unité destinatrice du message a émis en réponse un bit d'acquittement indiquant que le message a été convenablement reçu.

Cette condition pour l'évolution du rang et/ou de la valeur du bit supplémentaire présente l'avantage d'éviter toute perte de correspondance entre la valeur du rang du bit supplémentaire et/ou la valeur dudit bit mémorisée par l'unité maîtresse d'une part, et par l'unité esclave d'autre part. En effet, un message pourrait ne pas être reçu par l'unité esclave, ou être reçu de manière incomplète ou imparfaite. En conséquence l'unité esclave ne pourrait prendre en compte l'évolution correspondante du bit supplémentaire intervenue du point de vue de l'unité maîtresse. Une perte de correspondance entre les valeurs mémorisées par l'une et l'autre des unités interviendrait nécessairement si le rang et/ou la valeur du bit supplémentaire évoluaient à chaque émission d'un message par l'unité maîtresse.

Dans un mode de réalisation possible, le rang du bit supplémentaire est donné par la valeur d'un compteur modulo n+1 mémorisée d'une part dans l'unité maîtresse, et d'autre part dans l'unité esclave.

Plus précisément, l'unité maîtresse et l'unité esclave comportent chacune un tel compteur modulo n+1, dont les valeurs évoluent conjointement, comme il a été décrit ci-dessus.

Plus précisément encore, la valeur du compteur modulo n+1 de l'unité destinatrice d'un message est incrémentée lorsqu'un bit d'acquittement est émis en retour pour signifier que le message a été correctement reçu, et la valeur du compteur modulo n+1 de l'unité émettrice du message est incrémentée à réception de ce bit d'acquittement par ladite unité.

Le bit supplémentaire peut prendre la valeur logique 0 ou la valeur logique 1. Afin d'augmenter encore le niveau de sécurité de la communication contre les interventions frauduleuses des tiers, le bit supplémentaire BS peut prendre l'une de ces valeurs logiques à certains moments, et la valeur logique complémentaire à d'autres moments. Ainsi, la valeur du bit supplémentaire peut également évoluer selon une loi d'évolution connue de l'unité maîtresse et de l'unité esclave.

Dans un mode de réalisation, la valeur du bit supplémentaire BS change après chaque transmission correctement acquittée de la manière précédemment décrite. Ce mode de réalisation est le plus simple que l'on puisse envisager et le plus facile à mettre en oeuvre.

Toutefois, dans un autre mode de réalisation possible, la valeur du bit supplémentaire BS change pour au moins une valeur déterminée d'un compteur modulo p mémorisée d'une part dans l'unité maîtresse, et d'autre part dans l'unité esclave, ou p est un nombre entier quelconque supérieur à 1. De la sorte, la valeur du bit supplémentaire BS ne change pas à chaque transmission correctement acquittée, mais change toutes les p transmissions correctement acquittées.

Comme on l'aura compris, l'unité maîtresse et l'unité esclave comprennent alors chacune un compteur modulo p, qui est incrémenté, ainsi qu'il a été vu ci-dessus concernant les compteurs modulo n+1, à chaque fois qu'un message émis est correctement acquitté. Le nombre p peut être fixé, mais il peut également s'agir d'un paramètre dont la valeur est connue de l'unité maîtresse et de l'unité esclave seulement. De plus la valeur de ce paramètre peut évoluer d'une manière adaptée selon une loi d'évolution connue de l'unité maîtresse et de l'unité esclave. L'évolution du paramètre p procure alors un niveau de sécurité encore plus élevé.

Comme il a déjà été dit, le mot INFO d'information utile peut comporter plusieurs bits supplémentaires tel que le bit BS envisagé ci-dessus. On peut montrer que chaque bit supplémentaire introduit dans un mot INFO comportant n bits d'information utile, engendre, de par le fait que son rang dans le mot est quelconque, une multiplication par n+1 du nombre de valeurs différentes possibles pour le mot (voire par deux fois n+1, si la valeur de ce bit supplémentaire évolue également). On notera que, en comparaison, un bit supplémentaire introduit dans un code d'identification conforme à l'art antérieur, n'engendre qu'une multiplication par deux du nombre de valeurs possibles du code.

On va maintenant décrire un mode de mise en oeuvre du procédé selon l'invention dans un exemple où un unique bit supplémentaire BS est introduit dans un mot d'information comprenant huit bits (n=8) pour coder l'information utile.

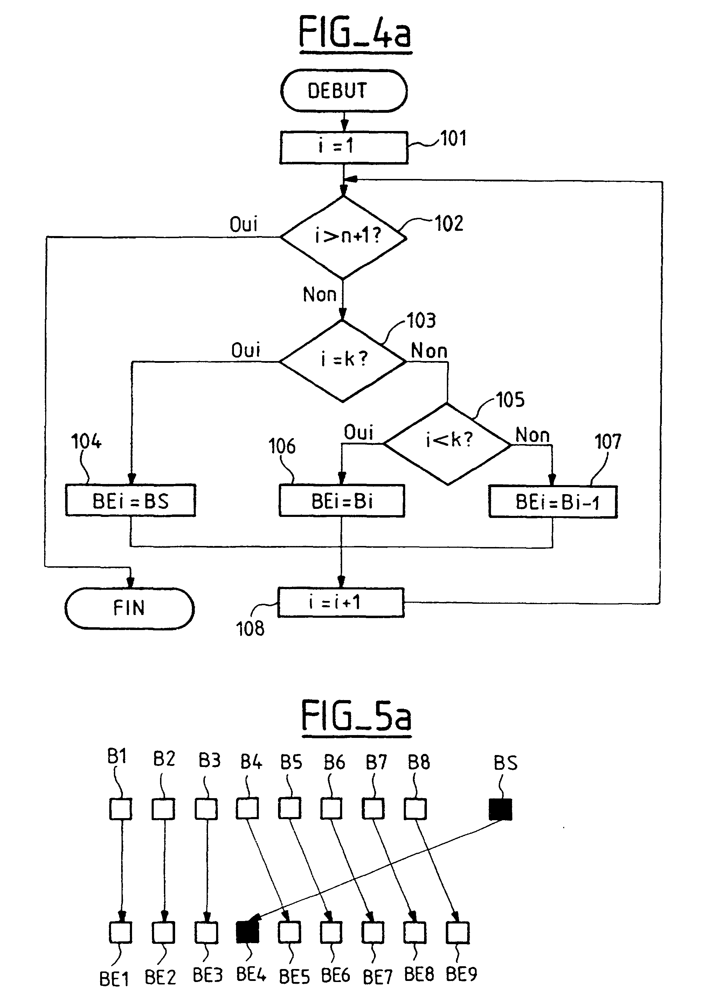

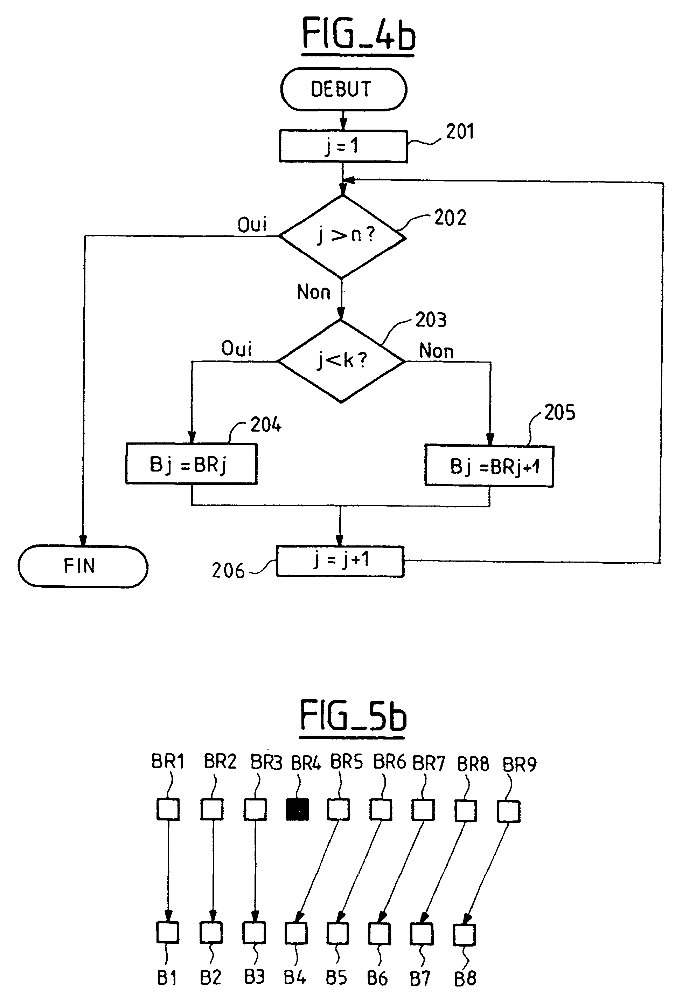

On distinguera, dans un premier temps, l'émission d'un message (figure 4a et figure 5a), et, dans un deuxième temps, la réception du message (figure 4b et figure 5b).

A la figure 4a, on a représenté un organigramme d'un programme pour la mise en oeuvre du procédé selon l'invention, permettant de générer les neuf bits BE1 à BE9 du mot d'information utile INFO d'un message à émettre, à partir de huit bits d'information utile B1 à B8 à transmettre d'une part, et de la valeur d'un bit supplémentaire BS selon l'invention d'autre part. On suppose que la valeur courante du rang du bit supplémentaire BS dans le mot INFO est égale à k, où k est un entier positif (inférieur ou égal à n). Ainsi qu'on l'a vu ci-dessus, cette valeur peut être délivrée par un compteur modulo 9 de l'unité émettrice.

A la figure 4a, la lettre i désigne un indice pouvant prendre une valeur de un à neuf. Le programme dont l'organigramme est représenté permet de déterminer successivement, de manière itérative, la valeur des neufs bits BEᵢ à émettre. A la figure 5a, on a indiqué l'affectation de la valeur des bits à émettre BE1 à BE9, en fonction de celle des bits d'information utile B1 à B8, d'une part et de celle du bit supplémentaire BS d'autre part, pour illustrer le déroulement de l'organigramme de la figure 4a.

Dans une première étape 101 après le début du programme, on donne à l'indice i la valeur 1.

Par un test 102, on vérifie ensuite si la valeur i est strictement supérieure à n+1.

Si la réponse est oui, alors le programme s'arrête (FIN), car cela signifie que pour chacun des bits à émettre BE1 à BE9, une valeur logique a été déterminée et affectée.

Si la réponse est non, alors par un test 103, on vérifie si l'indice i est égal à la valeur k qui est le rang auquel le bit supplémentaire BS doit être introduit dans le mot d'information utile INFO. On rappelle que cette valeur est connue par l'une et l'autre des unités émettrice et destinatrice.

Si la réponse est oui, alors à l'étape 104, on donne au bit à émettre BEᵢ, la valeur du bit supplémentaire BS. C'est ce qui est illustré à la figure 5a, pour une valeur de k égale à quatre (k=4).

Si la réponse est non, alors par un test 105, on vérifie si l'indice i est strictement inférieur à k.

Si la réponse est oui, alors dans une étape 106, on donne au bit à émettre BEᵢ, la valeur du bit d'information Bᵢ portant le même indice.

Si la réponse est non, alors dans une étape 107, on donne au bit à émettre BEᵢ, la valeur du bit d'information Bᵢ₋₁ portant l'indice de valeur précédente (c'est à dire i-1).

Dans une étape 108, faisant suite respectivement aux étapes 104, 106 ou 107, on incrémente la valeur de l'indice i d'une unité (i=i+1).

Puis le programme boucle en répétant le test 102 précité.

A la figure 4b, on a représenté un organigramme d'un programme pour la mise en oeuvre du procédé selon l'invention, permettant d'extraire les huit bits d'information utile B1 à B8 d'un mot d'information compris dans un message reçu et comportant neuf bits reçus BR1 à BR9 respectivement.

On suppose que la valeur courante du rang du bit supplémentaire BS dans le mot est égale à k, où k est un entier positif. Ainsi qu'on l'a vu ci-dessus, cette valeur peut être délivrée par un compteur modulo 9 de l'unité réceptrice. En tout état de cause, elle est connue par l'unité réceptrice.

A la figure 4b, la lettre j désigne un indice pouvant prendre une valeur de un à huit. Le programme dont l'organigramme est représenté permet de déterminer successivement, de manière itérative, la valeur des bits d'information utile Bⱼ en fonction de celle des bits reçus BR1 à BR9. A la figure 5b, on a indiqué l'affectation de la valeur des bits B1 à B8 pour illustrer le déroulement de l'organigramme de la figure 4b.

Dans une première étape 201 après le début du programme, on donne à l'indice j la valeur 1.

Par un test 202, on vérifie ensuite si la valeur de l'indice j est strictement supérieure à n.

Si la réponse est oui, alors le programme s'arrête (FIN), car cela signifie que pour chacun des bits d'information utile B1 à B8, une valeur logique a été déterminée et affectée.

Si la réponse est non, alors par un test 203, on vérifie si la valeur de l'indice j est strictement inférieure à la valeur k qui est le rang du bit supplémentaire BS dans le mot d'information utile INFO reçu.

Si la réponse est oui, alors à l'étape 204, on donne au bit d'information utile Bⱼ la valeur du bit reçu BRⱼ portant le même indice.

Si la réponse est non, alors dans une étape 205, on donne au bit d'information utile Bⱼ la valeur du bit reçu BRⱼ₊₁ portant l'indice j+1.

C'est ce qui est illustré à la figure 5b, pour une valeur de k égale à quatre (k=4).

Dans une étape 206, faisant suite respectivement aux étapes 204 ou 205, on incrémente la valeur de l'indice j de une unité (j=j+1).

Puis le programme boucle en répétant le test 202 précité.

Les programmes de mise en oeuvre du procédé de l'invention, décrit aux figures 4a et 4b ci-dessus, sont par exemple réalisés sous forme d'une machine d'état comprenant par exemple un circuit PLA ("Programmable Logic Array", en langue anglo saxonne).

## Revendications

1. Procédé de communication entre une unité maîtresse (1) et une unité esclave (2), du type consistant à transmettre des messages comportant un mot d'information utile (INFO) ainsi que un ou plusieurs bits de service (START,CHECK,STOP),
**caractérisé en ce que** le mot d'information utile (INFO) comprend n bits pour coder l'information utile et au moins un bit supplémentaire (BS) dont le rang dans le mot et/ou la valeur évoluent selon une loi d'évolution déterminée, connue de l'unité maîtresse et de l'unité esclave.

2. Procédé selon la revendication 1, **caractérisé en ce que** le rang et/ou la valeur du bit supplémentaire (BS) n'évoluent qu'après une transmission convenablement acquittée.

3. Procédé selon la revendication 1 ou selon la revendication 2, **caractérisé en ce que** le rang du bit supplémentaire (BS) est donné par la valeur d'un premier compteur modulo n+1 mémorisée d'une part dans l'unité maîtresse et d'autre part dans l'unité esclave.

4. Procédé selon l'une des revendications 1 à 3, **caractérisé en ce que** la valeur du bit supplémentaire (BS) change à chaque transmission correctement acquittée.

5. Procédé selon l'une des revendications 1 à 3, **caractérisé en ce que** la valeur du bit supplémentaire (BS) change pour au moins une valeur déterminée d'un second compteur modulo p mémorisée d'une part dans l'unité maîtresse et d'autre part dans l'unité esclave, où p est un entier quelconque supérieur à 1.

6. Procédé selon la revendication 3, **caractérisé en ce que** la valeur du premier compteur est incrémentée à chaque transmission convenablement acquittée.

7. Procédé selon la revendication 5, **caractérisé en ce que** la valeur du second compteur est incrémentée à chaque transmission convenablement acquittée.

8. Procédé selon l'une quelconque des revendications précédentes, **caractérisé en ce que** le mot d'information utile comporte plusieurs bits supplémentaires.

## Patentansprüche

1. Kommunikationsverfahren zwischen einer Haupteinheit (1) und einer Nebeneinheit (2), derart bestehend, um Nachrichten zu übertragen, umfassend ein zweckdienliches Informationswort (INFO), wie auch eines oder mehrere Service-Bits (START, CHECK, STOP),
**dadurch gekennzeichnet, dass** das zweckdienliche Informationswort (INFO) n Bits, um zweckdienliche Information zu kodieren, und mindestens ein zusätzliches Bit (BS) umfasst, von dem sich der Rang in dem Wort und/oder dem Wert gemäß einem bestimmten Entwicklungsgesetz entwickelt, welches von der Haupteinheit und der Nebeneinheit gekannt wird.

2. Verfahren gemäß Anspruch 1, **dadurch gekennzeichnet, dass** sich der Rang und/oder der Wert des zusätzlichen Bits (BS) erst nach einer zweckmäßig erfüllten Übertragung entwickelt.

3. Verfahren gemäß Anspruch 1 oder gemäß Anspruch 2, **dadurch gekennzeichnet, dass** sich der Rang des zusätzlichen Bits (BS) durch den Wert eines ersten Zählers Modulo n+1 ergibt, welcher einerseits in der Haupteinheit und andererseits in der Nebeneinheit gespeichert wird.

4. Verfahren gemäß einem der Ansprüche 1 bis 3, **dadurch gekennzeichnet, dass** sich der Wert des zusätzlichen Bits (BS) bei jeder korrekt erfüllten Übertragung ändert.

5. Verfahren gemäß einem der Ansprüche 1 bis 3, **dadurch gekennzeichnet, dass** sich der Wert des zusätzlichen Bits (BS) zu mindestens einem bestimmten Wert eines zweiten Zählers Modulo p ändert, welcher einerseits in der Haupteinheit und andererseits in der Nebeneinheit gespeichert wird, wo p ein Ganzes ist, welches beliebig größer als 1 ist.

6. Verfahren gemäß Anspruch 3, **dadurch gekennzeichnet, dass** der Wert des ersten Zählers bei jeder zweckmäßig erfüllten Übertragung erhöht wird.

7. Verfahren gemäß Anspruch 5, **dadurch gekennzeichnet, dass** der Wert des zweiten Zählers bei jeder zweckmäßig erfüllten Übertragung erhöht wird.

8. Verfahren gemäß irgendeinem der vorhergehenden Ansprüche, **dadurch gekennzeichnet, dass** das zweckdienliche Informationswort mehrere zusätzliche Bits umfasst.

## Claims

1. Procedure for communication between a master unit (1) and a slave unit (2), of the type consisting in transmitting messages comprising a useful information word (INFO) and one or more service bits (START, CHECK, STOP), **characterized in that** the useful information word (INFO) comprises n bits to code the useful information and at least one additional bit (BS) whose rank in the word and/or value change according to a determined law of change, known to the master unit and the slave unit.

2. Procedure according to Claim 1, **characterized in that** the rank and/or the value of the additional bit (BS) change only after a suitably acknowledged transmission.

3. Procedure according to Claim 1 or according to Claim 2, **characterized in that** the rank of the additional bit (BS) is given by the value of a first counter modulo n+1, which value is stored on the one hand in the master unit and on the other hand in the slave unit.

4. Procedure according to one of Claims 1 to 3, **characterized in that** the value of the additional bit (BS) alters with each correctly acknowledged transmission.

5. Procedure according to one of Claims 1 to 3, **characterized in that** the value of the additional bit (BS) alters for at least one determined value of a second counter modulo p, which value is stored on the one hand in the master unit and on the other hand in the slave unit, where p is any integer greater than 1.

6. Procedure according to Claim 3, **characterized in that** the value of the first counter is incremented at each suitably acknowledged transmission.

7. Procedure according to Claim 5, **characterized in that** the value of the second counter is incremented at each suitably acknowledged transmission.

8. Procedure according to any one of the preceding claims, **characterized in that** the useful information word comprises several additional bits.
